# EUROPÄISCHE PATENTSCHRIFT

(11) **EP 1 130 729 B1**
(45) Veröffentlichungstag und Bekanntmachung des Hinweises auf die Patenterteilung: **10.11.2010**
(21) Anmeldenummer: 01102866.9
(22) Anmeldetag: 14.02.2001
(51) Int. Cl.: H02B 11/127

(54) **Schaltfeld mit einem Fahrgestell**
Switchgear cell with withdrawal carriage
Cellule de commutation avec chariot d'extraction

(30) Priorität: 04.03.2000 DE 10010738
(43) Veröffentlichungstag der Anmeldung: 05.09.2001
(73) Patentinhaber: AREVA T&D SA, 92084 Paris La Defense (FR)
(72) Erfinder: Jakob, Karl, 93049 Regensburg (DE); Reichl, Erwin, 93105 Tegernheim (DE); Herrmann, Johann, 93055 Regensburg (DE)
(74) Vertreter: Schäfer, Wolfgang

(56) Entgegenhaltungen:
- DE-A- 19 749 850
- DE-U- 29 601 101

## Beschreibung

Die Erfindung betrifft ein Schaltfeld mit einem in einem Gerüst zwischen zwei Endstellungen verfahrbaren, mit wenigstens einem Schalter versehenen Fahrgestell, mit einer das Fahrgestell antreibenden, eine Antriebswelle aufweisenden Antriebseinheit und mit einem zwischen der Antriebswelle und dem Fahrgestell angeordneten Einfahrgetriebe.

Ein bekanntes Schaltfeld dieser Art, das aus der DE 38 12 853 C1 bekannt geworden ist, weist in einem Gerüst in die Gehäusetiefe parallel verlaufende Laufschienen auf, auf welchen ein Fahrgestell mit Laufrollen verfahrbar aufsitzt.

Das Fahrgestell trägt drei in waagrechter Richtung nebeneinander angeordnete Schalterpole, von welchen je zwei senkrecht übereinander angeordnete Kontaktarme in die Gehäusetiefe frei hinausragen. Der so aus dem Fahrgestell, Schalterpolen und zugeordnete Betätigungseinrichtungen gebildete Schaltwagen ist mit einer horizontal verlaufenden Traverse versehen, die an der Frontseite des Fahrgestells anliegt und nach dem manuellen Einschieben des Schaltwagens in das Gerüst mit letzterem verriegelt wird. Die Anordnung ist dabei so getroffen, dass die Kontaktarme noch mit Abstand von im rückwärtigen Teil des Gerüsts angeordneten Gegenkontakten stehen. An der Traverse ist eine Gewindespindel drehbar, aber axial unverschiebbar gelagert, auf die ein mit dem Schaltwagen verbundenes Gewindemutterstück aufgedreht ist. Die Gewindespindel ist durch die Traverse hindurch zugänglich und mit einer Handkurbel kuppelbar, mittels welcher die Gewindespindel gedreht werden kann. Hierdurch kann der Schaltwagen unter Abstützung an der Traverse weiter in die Tiefe des Schaltfeldgerüsts bewegt werden, bis die Kontaktarme mit den zugeordneten gerüstfest angeordneten Gegenkontakten in elektrische Kontaktanlage treten. Die oberen Kontaktarme durchgreifen dabei Durchbrüche in einer senkrechten Trennwand, hinter welcher die mit Sammelschienen verbundenen zugehörigen Gegenkontakte angeordnet sind. Diesen Durchbrüchen ist eine gemeinsame Schließblende zugeordnet, die parallel zur Trennwand verschiebbar gelagert ist und über ein Hebelgestänge mit einem von der Gewindespindel gesteuerten Betätigungshebel so in Wirkverbindung steht, dass in der ausgefahrenen Trennstellung des Schaltwagens die Schließblende die Durchbrüche verschließt und zu Beginn der Einfahrbewegung bei der ersten Betätigung der Gewindespindel die Durchbrüche für das Einfahren der oberen Kontaktarme freigibt. Beim Zurückfahren des Schaltwagens in die anfängliche Ausfahrstellung wird mit der letzten Drehung der Gewindespindel auch die Schließblende wieder in Schließstellung bewegt.

Ein anderes Schaltfeld ist beispielsweise aus der DE 196 15 312 A1 bekannt geworden. Das dort beschriebene Einfahrgetriebe weist zum Verfahren des Fahrgestells ebenfalls einen Spindelantrieb mit einer Gewindespindel und einem Gewindemutterstück auf, das über ein Lenkergestänge mit dem Fahrgestell gekoppelt ist.

Nachteil solcher bekannten Anordnungen ist, dass die Verwendung einer Gewindespindel einen entsprechend großen Bauraum beansprucht. Außerdem sind derartige Spindelantriebe mit einem sehr hohen Reibungsverlust behaftet.

Der vorliegenden Erfindung liegt deshalb die Aufgabe zugrunde, ein Schaltfeld bereitzustellen, welches ein einfach aufgebautes Einfahrgetriebe aufweist, das einen geringen Bauraum beansprucht und mit geringen Reibungsverlusten behaftet ist. Außerdem soll die Antriebswelle beim Verfahren des Fahrgestells mit einem relativ gleichmäßigen Drehmoment beaufschlagt werden.

Diese Aufgabe wird bei einem Schaltgerät der eingangs beschriebenen Art erfindungsgemäß dadurch gelöst, dass das Einfahrgetriebe eine von der Antriebswelle antreibbare Kurvenscheibe mit Vorschubkurve und einen mit der Kurvenscheibe über die Vorschubkurve in Wirkverbindung stehenden Hebelmechanismus aufweist, wobei der Hebelmechanismus zum Verfahren des Fahrgestells mit dem Fahrgestell gekoppelt ist.

Ein derartiges Schaltfeld weist außerdem den Vorteil auf, dass mit einer relativ geringen Anzahl von Bauteilen unter Beanspruchung von relativ wenig Bauraum ein geeignetes und funktionssicheres Verfahren des Fahrgestells ohne Auftreten von größeren Reibungsverlusten gewährleistet werden kann.

Eine Weiterbildung der Erfindung zeichnet sich dadurch aus, dass der Hebelmechanismus wenigstens eine mit der Vorschubkurve in Wirkverbindung stehende, an einem Zwischenhebel angreifende Schubstange aufweist, wobei der Zwischenhebel einerends ortsfest angeordnet schwenkbar gelagert ist und anderenends mit dem einen Ende einer Antriebsstange gelenkig verbunden ist, deren anderes Ende zum Verfahren des Fahrgestells mit dem Fahrgestell gelenkig verbunden ist. Vorteilhafterweise können dabei unterschiedliche Fahrwege des Fahrgestells durch Änderung der Übersetzungsverhältnisse des Zwischenhebels, der Schubstange und der Antriebsstange realisiert werden.

Bei einer anderen Ausgestaltung der Erfindung ist vorgesehen, dass die Vorschubkurve eine Kulissennut ist, in die ein an der Schubstange angeordnetes Abtastglied eingreift. Vorteilhafterweise ist das Abtastglied dabei eine auf einem Tastbolzen drehbar gelagerte Tastrolle. Durch eine solche Wirkverbindung der Kurvenscheibe mit der Schubstange kann die Schubstange vorteilhafterweise nahezu reibungsfrei und funktionsgenau verschoben werden.

Zur geführten Verschiebung der Schubstange kann die Schubstange vorteilhafterweise eine Koppelkurve aufweisen, in die ein ortsfest angeordneter Bolzen eingreift. Insbesondere wird durch die Koppelkurve erreicht, dass das in die Vorschubkurve eingreifende mit der Schubstange gekoppelte Abtastglied linear verfahren wird.

In einer Weiterbildung der Erfindung ist vorgesehen, dass die Kurvenscheibe auf einem Bolzen drehbar gelagert ist, wobei dieser Bolzen in die Koppelkurve eingreift. Eine derartige Anordnung weist den Vorteil auf, dass der Lagerbolzen der Kurvenscheibe eine Doppelfunktion innehat, nämlich zum einen, die Kurvenscheibe zu lagern, und zum anderen, in die Koppelkurve der Schubstange einzugreifen, um diese in Verbindung mit dem Abtastglied geführt zu verschieben.

Eine besonders vorteilhafte Ausgestaltung der Erfindung kennzeichnet sich dadurch, dass das Schaltfeld als Hebelmechanismus zwei spiegelsymmetrisch zueinander angeordnete Schubstangen, Zwischenhebel und Antriebsstangen aufweist, wobei die beiden Schubstangen über ein Abtastglied gegeneinander verschwenkbar verbunden sind. Dabei ist vorteilhafterweise das Abtastglied eine auf einem Tastbolzen gelagerte Tastrolle. Durch Realisierung eines solchen spiegelsymmetrischen Aufbaus des Hebelmechanismuses wird eine gleichmäßige Kraftverteilung bei Verschieben des Fahrgestells auf den Hebelmechanismus sowie auf die Kurvenscheibe ermöglicht. Außerdem wird durch den spiegelsymmetrischen Aufbau ein völlig paralleles Verfahren des Fahrgestells sichergestellt. Ferner wird der Einsatz von Gleichteilen möglich, was zu einer erheblichen Kostenreduzierung in der Fertigung der Getriebebauteile führt.

Eine weitere besonders vorteilhafte Ausgestaltung der Erfindung kennzeichnet sich dadurch, dass die Vorschubkurve in den Endstellungen des Fahrgestells weitgehend konzentrische Kurvenabschnitte aufweist, die keine oder nahezu keine Einfahrbewegung erzeugen. Dadurch wird einerseits erreicht, dass eine Kraftrückwirkung über das Fahrgestell auf die Schubstangen, wie sie beispielsweise durch Kurzschlusskräfte erfolgen kann, zu keiner auf die Kurvenscheibe verdrehend wirkenden Komponente führt und dass andererseits bereits vor Erreichen der Endlagen der Kurvenscheibe die Schubbewegung auf das Fahrgestell beendet ist und der jeweilige Restweg der Kurvenscheiben-Drehbewegung für das Umsteuern der Stellungsanzeiger und Verriegelungseinrichtungen sowie in der Trennstellung für den Antrieb der beweglichen Blenden genutzt werden kann. Ferner wird ein sanftes Beschleunigen bzw. Abbremsen des Fahrgestells in den Endstellungen ermöglicht.

Nach Einleitung der Einfahrbewegung kann die Vorschubkurve vorteilhafterweise einen Kurvenabschnitt mit einer großen Kurvensteigung aufweisen. Dadurch wird das Fahrgestell in diesem Bereich mit relativ hoher Geschwindigkeit in das Schaltfeld eingefahren bzw. aus diesem herausgefahren.

Zum Einfahren des Fahrgestells in die Kontakte mit den dafür erforderlichen relativ großen Vorschubkräften weist die Vorschubkurve kurz vor Erreichen der maximalen Einfahrbewegung des Fahrgestells in das Schaltfeld vorteilhafterweise einen Kurvenabschnitt mit einer flachen Kurvensteigung auf.

Bei einer Weiterbildung der Erfindung werden in den Endstellungen des Fahrgestells Meldungen mittels Meldeschieber abgegeben. Solche Meldungen geben die Position des Fahrgestells bzw. der Schalterstellung an, insbesondere, ob der Schalter in "Tennstellung" oder "Betriebsstellung" steht.

Eine andere Weiterbildung der Erfindung sieht vor, dass in den Endstellungen des Fahrgestells Verriegelungen gesetzt werden. Solche Verriegelungen sind deshalb notwendig, um sicherzustellen, dass z.B. ein zugeordneter Leistungsschalter nur in vollständiger Einfahrstellung des Fahrgestells eingeschaltet werden kann, und dass beispielsweise der Erdungsschalter nur in vollständiger Ausfahrstellung des Fahrgestells eingeschaltet werden kann.

Zur Verriegelung kann daher vorgesehen sein, dass die Kurvenscheibe wenigstens eine Verriegelungskurve aufweist, in welche nahe der Kurvenscheiben-Endstellungen ein Verriegelungsbolzen zur Verriegelung bzw. Entriegelung der in Funktionsverbindung mit dem Fahrgestell stehenden Geräte eingreift. Die Anbringung der Verriegelungskurven an der Kurvenscheibe ist deshalb von Vorteil, weil die Kurvenscheibe in den Endstellungen des Fahrgestells eine definierte Position einnimmt.

Vorteilhafterweise kann dabei vorgesehen sein, dass ein um eine Achse schwenkbar gelagerter Verriegelungshebel mit zwei Verriegelungsbolzen vorhanden ist, wobei in der einen Endstellung des Fahrgestells der eine Verriegelungsbolzen in eine Verriegelungskurve und in der anderen Endstellung der andere Verriegelungsbolzen in eine weitere Verriegelungskurve an der Kurvenscheibe eingreift. Auf diese Art und Weise ist ein sicheres Verriegeln bzw. Entriegeln in den Endstellungen des Fahrgestells mit einem minimalen Aufwand möglich.

Zur Abgabe einer Meldung über den Verriegelungszustand kann vorteilhafterweise an dem Verriegelungshebel ein Meldeschieber vorgesehen sein.

Bei einer besonders vorteilhaften Ausgestaltung der Erfindung erfolgt die maximale Einfahrbewegung des Fahrgestells in das Schaltfeld bei einer Drehung der Kurvenscheibe von weniger als 360°. Dadurch wird eine einfache Zuordnung der beiden Endstellungen des Fahrgestells, nämlich der "Trennstellung" und der "Betriebsstellung", auf der Kurvenscheibe erreicht.

Bei dem erfindungsgemäßen Schaltfeld kann außerdem vorgesehen sein, dass bei Einleitung der Einfahrbewegung des Fahrgestells in das Schaltfeld ein Schieberhebel Schließblenden öffnet und bei Beendigung der Ausfahrbewegung diese Schließblenden wieder schließt. Derartige Schließblenden sind insbesondere aus sicherheitstechnischen Erwägungen zwischen den Durchbrüchen, in welche die Kontaktarme des auf dem Fahrgestell angeordneten Schalterwagens bei Betriebsstellung eingreifen, zwingend erforderlich.

Dazu kann an der Kurvenscheibe eine Blendenkurve vorhanden sein, in die ein an dem Schieberhebel angeordnetes Abtastglied eingreift.

Vorteilhafterweise ist bei dem erfindungsgemäßen Schaltfeld die Antriebswelle eine Ritzelwelle, die in an der Kurvenscheibe vorhandene Zahnlücken eingreift. Dadurch wird ein sicheres und genaues Antreiben der Kurvenscheibe über die Antriebswelle gewährleistet.

Dabei kann die Kurvenscheibe insbesondere als Kreisscheibe ausgestaltet sein, wobei die Zahnlücken sowie die zwischen den Zahnlücken vorhandenen Zahnstege im Bereich des Außenumfangs der Kurvenscheibe angeordnet sind. Insbesondere empfiehlt sich eine Kurvenscheibe aus Stahlblech, bei der die Zahnlücken auf einfache Art und Weise durch beispielsweise Stanzen oder Laserschneiden eingebracht werden können.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Fig. 1:: eine Querschnittsdarstellung durch ein Schaltfeld mit einem in Einfahrstellung befindlichen Fahrgestells;
- Fig. 2:: eine Teildarstellung des in einer Kassette gelagerten Einfahrgetriebes mit Fahrgestell in Ausfahrstellung;
- Fig. 3:: einen Teilschnitt durch die Kassette nach Fig. 2;
- Fig. 4:: die in der Fig. 2 gezeigte Ansicht der Kassette in Einfahrstellung des Fahrgestells; und
- Fig. 5:: einen Ausschnitt aus Fig. 2 bzw. Fig. 3 in Zwischenstellung zwischen Einfahr- und Ausfahrstellung des Fahrgestells.

Ein Schaltfeld, das insbesondere für die Anwendung in Mittel- und Hochspannungsnetzen geeignet ist, weist ein quaderförmiges Gerüst 1 auf, das frontseitig im unteren Bereich und im mittleren Bereich je eine Tür 2,3 und im oberen Bereich einen Steuerkasten 4 aufweist. Durch die untere Tür 2 ist ein Kabelraum 5 mit von unten eingeführten Kabeln 6 vorgesehen, die über Stromschienen je Phase mit einem an der Rückseite 8 des Gerüsts 1 angeordneten Stromwandler 9 und einem darunter angeordneten Spannungswandler 10 elektrisch verbunden sind. Von den Stromwandlern führen die Stromleiter zu darüber angeordneten Gegenkontakten 11, die über Trichterdurchführungen 12 an einer mit dem Gestell 1 verbundenen Zwischenwand 13 fest verbunden sind. Darüber befindet sich in entsprechender Anordnung eine weitere Trichterdurchführung 12 mit darin festgesetztem Gegenkontakt 11, der jeweils über weitere Stromleiter 7 mit einer Sammelschiene eines dreiphasigen Sammelschienen-systems 14 verbunden ist. Bei dreiphasiger Ausgestaltung sind jeweils drei Gegenkontakte in waagerechter Richtung nebeneinander in der Trennwand 13 angeordnet. Oberhalb des Kabelraums 5 und zwischen der mittleren Tür 3 sowie der Trennwand 13 befindet sich ein Schalterraum 15, in dem je Phase ein Leistungsschalterpol 16 in Form eines Vakuumsschalters mit senkrechter Achse angeordnet ist. Mit den Anschlüssen des Leistungsschalterpoles 16 sind in der Höhe mit Abstand angeordnete Kontaktarme 17 verbunden, die in die Gerüsttiefe hineinragen und in der dargestellten Einfahrstellung des Leistungsschalterpoles 16 in Steckkontaktverbindung mit den gerüstfesten Gegenkontakten 11 stehen. Die Leistungsschalterpole 16 sitzen an einem Antriebskasten 18, von dem eine Betätigungswippe 19 zum beweglichen Kontaktbolzen 20 des Leistungsschalterpoles 16 führt und über den die Ein- oder Ausschaltung des Leistungsschalterpoles 16 erfolgt. Der Antriebskasten 18 ist auf einem Fahrgestell 21 montiert, das über Laufräder 22 in Laufschienen 23 verfahrbar geführt ist, welche aus dem Bereich der Tür 3 in die Gerüsttiefe zur Trennwand 13 hin parallel zueinander verlaufen. Die Laufschienen 23 sitzen auf einer Bodenplatine 25 einer aus Stabilitätsgründen wannenförmig gestalteten
Einschubkassette 24, welche nach dem Einschieben der aus der Kassette 24, dem Fahrgestell 21, dem Antriebskasten 18 und dem Leistungschalter 16 gebildeten Schaltwagen-Einheit mittels einer horizontal verlaufenden Traverse 26 lösbar am Gerüst 1 arretiert wird. Beim Einsetzen dieser Einheit in den Schalterraum 15 befindet sich jedoch das Fahrgestell 21 mit dem Antriebskasten 18 und den Leistungsschalterpolen 16 in einer Ausfahrstellung, in welcher der der Tür 3 zugewandte Antriebskasten nahe an der Tür 3 steht und die Steckverbindungen 11, 17 durch die entsprechend weit zur Tür 3 hin verstellten Kontaktarme 17 aufgetrennt sind.

Um das Fahrgestell 21 in der Kassette 24 verfahren zu können, ist eine Antriebseinrichtung vorgesehen, die eine Antriebswelle 27 umfasst, welche gegen axiales Verstellen gesichert in der Traverse 26 drehbar gelagert ist und ein zur Tür 3 hin weisendes Kuppelstück 28 zum Aufstecken einer Handkurbel aufweist.

Anstelle einer Handkurbel kann auch zum Antrieb der Antriebswelle ein elektrischer Antrieb vorgesehen sein.

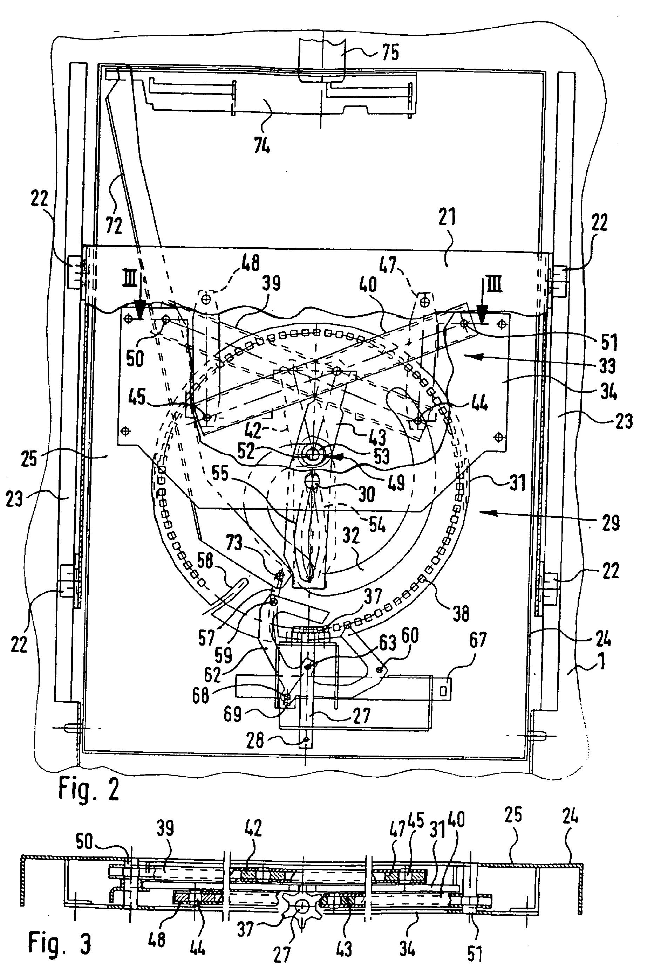

Wie aus Fig. 2, 3 und 4 ersichtlich ist, ist zwischen der Antriebswelle 27 und dem Fahrgestell 21 ein Einfahrgetriebe 29 vorhanden. In der Fig. 2 ist die Draufsicht der eingeschobenen Einschubkassette 24 in dem Gerüst 1 mit dem verfahrbaren Fahrgestell 21 dargestellt. Das Einfahrgetriebe 29 weist dabei eine auf einem Bolzen 30 drehbar gelagerte Kurvenscheibe 31 mit Vorschubkurve 32 und einem mit der Kurvenscheibe 31 über die Vorschubkurve 32 gekoppelten Hebelmechanismus 33 auf, wobei der Hebelmechanismus 33 zum Verfahren des Fahrgestells 21 mit dem Fahrgestell 21 gekoppelt ist. Das Einfahrgetriebe 29 ist dabei zwischen der Bodenplatine 25 der Einschubkassette 24 und einem an der Bodenplatine 25 befestigten Deckel 34 angeordnet.

Die Kurvenscheibe 31 ist, wie aus Fig. 2 deutlich erkennbar ist, als Kreisscheibe mit zwei ausgebildet. Zum Antrieb der Kurvenscheibe 31 weist die Antriebswelle 27 ein Ritzel 37 auf, das in im Bereich des Außenumfangs der Kurvenscheibe 31 vorhandene Zahnlücken 38 eingreift. Vorteilhafterweise ist dabei die Kurvenscheibe 31 aus Stahlblech.

Der Hebelmechanismus 33 weist zwei mit der Vorschubkurve 32 gekoppelte, an je einen Zwischenhebel 39 und 40 angreifende Schubstangen 42 und 43 auf. Die Zwischenhebel 39 und 40 sind einerends über je einen Bolzen 50 und 51 an der Bodenplatine 25 und dem Deckel 34 ortsfest schwenkbar gelagert angeordnet und andernends über die Bolzen 44 und 45 mit dem einen Ende je einer Antriebsstange 47 und 48 gelenkig verbunden. Das jeweilige andere Ende der Antriebsstange 47 und 48 ist zum Verfahren des Fahrgestells 21 mittels Gelenkbolzen mit dem Fahrgestell 21 gelenkig verbunden.

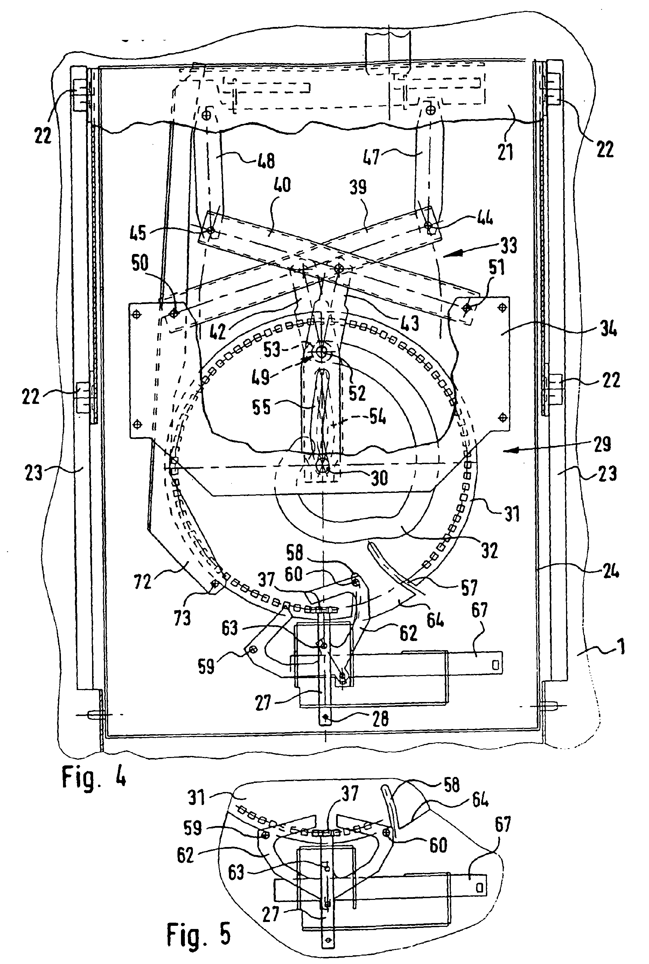

Aus den Fig. 2 und 4 ist deutlich zu erkennen, dass der Hebelmechanismus 33 spiegelsymmetrisch aufgebaut ist, wobei die beiden Schubstangen 42 und 43 über ein in die kulissenförmige Vorschubkurve 32 eingreifendes Abtastglied 49 gegeneinander verschwenkbar miteinander verbunden sind. Das Abtastglied 49 ist dabei als eine auf einem Tastbolzen 52 gelagerte Tastrolle 53 ausgebildet.

Zur Führung der weitgehend linearen Verschiebung der Schubstangen 42 und 43 weisen die Schubstangen 42 und 43 jeweils eine Koppelkurve 54 und 55 auf, wobei der Bolzen 30 in die beiden Koppelkurven 54 und 55 eingreift. Die Schubstangen 42 und 43 sind zur günstigeren Wirkverbindung mit den Zwischenstangen 39, 40 in Draufsicht nicht geradlinig sondern etwas abgeknickt ausgeführt. In dem in den Figuren gezeigten Ausführungsbeispiel beträgt der Abknickwinkel ca. 12°. Außerdem weisen die Koppelkurven 54 und 55 eine leichte Krümmung auf.

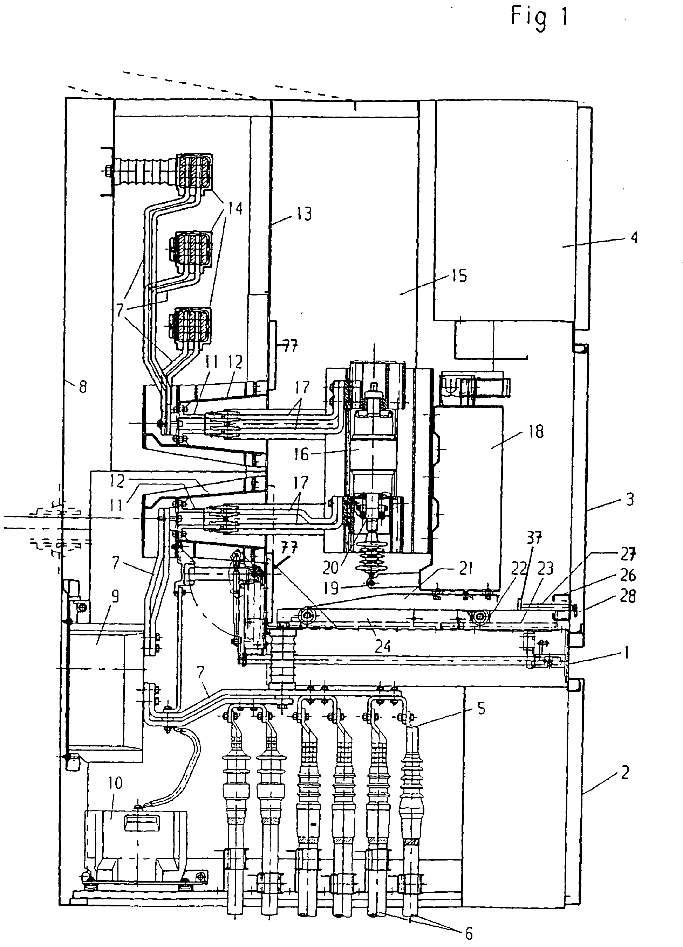

Aufgrund der symmetrischen Anordnung der Schubstangen 42, 43, Zwischenhebeln 39, 40 und Antriebsstangen 47 und 48 sowie der in die Schubstangen 42 und 43 eingearbeiteten Koppelkurven 54 und 55 wird eine lineare Bewegung der Tastrolle 53 bei sich drehender Kurvenscheibe 31 sichergestellt. Während sich beim Ein- bzw. Rückfahren des Fahrgestells 21 die Schubstangen 42 und 43 sowie die Antriebsstangen 47 und 48 weitgehend linear bewegen, erfahren die beiden Zwischenhebel 39 und 40 eine Schwenkbewegung um den jeweiligen Bolzen 50 und 51. Der Winkel zwischen beiden Zwischenhebel 39 bzw. 40 und zugehörigen Antriebsstangen 47 bzw. 48 beträgt in der Einfahrstellung nach Fig. 4 ca. 110° und in der Rückfahrstellung nach Fig. 1 ca. 70°.

In den Koppelkurven 54 und 55 werden die Querkräfte, die über die Tastrolle 53 auf die Schubstangen 42 und 43 wirken, in den Bolzen 30 eingeleitet. Dabei läuft die Tastrolle 53 in der Mittelebene der Kurvenscheibe 31.

Bei der in Fig. 2 gezeigten zurückgefahrenen Stellung des Fahrgestells 21 befindet sich die Tastrolle 53 an dem einen Ende der Vorschubkurve 32. Durch Drehen der Antriebswelle 27 nach rechts durchläuft die Abtastrolle 53 zunächst einen weitgehend konzentrischen Kurvenabschnitt, der keine Einfahrbewegung des Vorschubs 21 in das Schaltfeld erzeugt. Aufgrund dieses konzentrischen Kurvenabschnitts wird ohne Bewegung des Fahrgestells 21 zunächst ein Verriegelungshebel 62 mit einem Verriegelungsbolzen 59 in eine an der Kurvenscheibe vorhandene Verriegelungskurve 58 bewegt. Bei weiterer Drehung der Kurvenscheibe wird das Fahrgestell 21 mit dem Antriebskasten 18 und dem Leistungsschalterpol 16 mit den Kontaktarmen 17, die in Fig. 1 deutlich zu erkennen sind, langsam beschleunigt. Nach Einleitung der Einfahrbewegung des Fahrgestells 21 weist die Vorschubkurve 32 einen Kurvenabschnitt mit einer größeren Kurvensteigung auf. Aufgrund dieser größeren Kurvensteigung erfolgt eine Beschleunigung des Fahrgestells 21 in das Schaltfeld. Vor Erreichen der eingefahrenen Endstellung des Fahrgestells 21, die in Fig. 4 gezeigt ist, weist die Vorschubkurve 32 einen Kurvenabschnitt mit einer geringen Kurvensteigung auf. Dadurch werden große Vorschubkräfte zum Auffahren der Kontaktarme 17 auf die Gegenkontakte 11 bzw. zum Zurückfahren des Fahrgestells 21 übertragen. Dabei können unterschiedliche Fahrwege und Fahrgeschwindigkeiten des Fahrgestells 21 einerseits durch Variieren der Vorschubkurve 32 sowie durch Verändern der Längen der Schubstange 42, 43, der Zwischenhebel 39, 40 und der Antriebsstangen 47 und 48 erreicht werden.

Fig. 4 zeigt dabei die Endstellung des Fahrgestells 21 in Einfahrstellung. Deutlich zu erkennen ist, dass die Tastrolle 53 sich an dem anderen Ende der Vorschubkurve 32 wie in Fig. 2 befindet.

Fig. 3 zeigt den Schnitt entlang der Linie III durch Fig. 2. Dabei ist die Kurvenscheibe 31, die mittig zwischen dem einen Hebelsystem, bestehend aus der Schubstange 43, dem Zwischenhebel 40 und der Antriebsstange 48, und dem anderen Hebelsystem, mit der Schubstange 42, dem Zwischenhebel 39 und der Antriebsstange 47, angeordnet. Aufgrund dieser mittigen Lage der Kurvenscheibe 31 ergibt sich eine mittige Krafteinteilung auf die Kurvenscheibe 4 bzw. auf den Bolzen 30.

In Fig. 3 ist außerdem das Ritzel 37 der Antriebswelle 27, welches die Kurvenscheibe 31 über die Zahnlücken 38 antreibt, deutlich zu erkennen.

Wie in den Fig. 2 und 4 gezeigt ist, weist die Kurvenscheibe 31 zwei weitere Kurven, nämlich zwei Verriegelungskurven 57 und 58, auf. Zur Verriegelung der Kurvenscheibe 31 in den jeweiligen Endstellungen greifen Verriegelungsbolzen 59 und 60 in die Verriegelungskurven 57 und 58 ein. Die Verriegelungsbolzen 59 und 60 sind dabei an einen Verriegelungshebel 62, der mittels einem Bolzen 63 verschwenkbar gehaltert ist, angeordnet. Bei Erreichen der Rückfahrstellung befindet sich der Verriegelungsbolzen 59 in der Verriegelungskurve 57, wie in Fig. 2 dargestellt ist. In Einfahrstellung des Fahrgestells 21, welche Fig. 4 darstellt, ist der Verriegelungsbolzen 60 in die Verriegelungskurve 58 eingefahren. Durch Einfahren der Verriegelungsbolzen 59 und 60 in die jeweilige Verriegelungskurve 58 und 59 ist ein Weiterdrehen der Kurvenscheibe 31 in die entsprechende Richtung nicht möglich. Um ein sicheres Eingreifen der Verriegelungsbolzen 59 und 60 in die entsprechende Verriegelungskurve 57 und 58 zu gewährleisten, weist die Kontur der Kurvenscheibe 31 in dem Bereich zwischen den beiden Verriegelungskurven 57 und 58, der keine Zahnlücken 38 aufweist, einen radial abstehenden Absatz 64 auf. Aufgrund dieses Absatzes 64 wird der entsprechende Verriegelungsbolzen 59 oder 60 durch Drehen der Kurvenscheibe 31 in die entsprechende Verriegelungskurve 57 oder 58 geführt. Dadurch wird vorteilhafterweise erreicht, dass in den beiden Endstellungen eine völlige Rückwirkungsfreiheit vom verschiebaren Fahrgestell auf die Antriebswelle herrscht.

Zur Meldung des entsprechenden Verriegelungszustandes ist an dem Verriegelungshebel 62 ein linear verschiebbarer Meldeschieber 67 über einen Bolzen 68, der in ein Langloch 69 am Meldeschieber 67 eingreift, angeordnet. Bei Erreichen einer Endstellung des Fahrgestells 21 gibt also der Meldeschieber 67 durch lineares Verschieben infolge des Einfahrens der entsprechenden Verriegelungsbolzen 59 oder 60 in die entsprechende Verriegelungskurve 57 oder 58 eine Meldung über den Verriegelungszustand an beispielsweise eine zentrale Steuereinheit ab.

Fig. 5 zeigt den Zustand des Verriegelungshebels 62 während des Ein- oder Ausfahrens des Fahrgestells 21. Deutlich zu erkennen ist, dass die Verriegelungsbolzen 59 und 60 derart an dem Verriegelungshebel 62 angeordnet sind, dass sie an der Kontur der Kurvenscheibe 31 nahezu anliegen. Dadurch wird gewährleistet, dass der Verriegelungshebel 62 in einer definierten Mittelstellung gehalten wird und in den Endbereichen der Drehbewegung der Kurvenscheibe 31 der entsprechende Verriegelungsbolzen 59 oder 60 von dem radial abstehenden Absatz 64 der Kurvenscheibe 31 erfasst und in die entsprechende Verriegelungskurve 57 oder 58 eingeführt werden kann.

Wie in Fig. 2 und 4 zu erkennen ist, ist außerdem ein in dem Bolzen 50 schwenkbar gelagerter Schieberhebel 72 vorhanden. Der Schieberhebel 72 weist dabei an seinem der Kurvenscheibe 31 zugewandten Ende einen Abtastbolzen 73 auf, der in der in Fig. 2 gezeigten Rückfahrstellung in die Verriegelungskurve 57 eingreift. Aus diesem Grunde ist die Verriegelungskurve 57 im Vergleich zu der Verriegelungskurve 58 etwas länger ausgebildet. Das der Kurvenscheibe 31 abgewandte Ende des Schieberhebels 72 ist mit einem Schieberelement 74 gekoppelt, welches einen schaltfeldseitigen Blendenbetätigungshebel 75 beaufschlagt. Der Blendenbetätigungshebel 75 öffnet dabei bei Einleitung der Einfahrbewegung des Fahrgestells 21, d.h. bei Austritt des Abtastbolzens 73 aus der Verriegelungskurve 57, in Fig. 1 dargestellte Schließblenden 77. Bei Rückfahrstellung verschließen die Schließblenden 77 die Durchbrüche zwischen dem Schalterraum 15 und den die Gegenkontakte 11 enthaltenden Trichterdurchführungen 12 entlang der Zwischenwand 13.

Aus Fig. 2 und 4 wird außerdem deutlich, dass nach einem Drehwinkel von ca. 310° der Kurvenscheibe 31 die maximale Einfahrstellung des Fahrgestells 21 in das Schaltfeld erreicht ist.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Schaltfeld mit einem in einem Gerüst (1) zwischen zwei Endstellungen verfahrbaren, mit wenigstens einem Schalter (16) versehenen Fahrgestell (21), mit einer das Fahrgestell (21) antreibenden, eine Antriebswelle (27) aufweisenden Antriebseinheit und mit einem zwischen der Antriebswelle (27) und dem Fahrgestell (21) angeordneten Einfahrgetriebe (29), **dadurch gekennzeichnet, dass** das Einfahrgetriebe (29) eine von der Antriebswelle (27) antreibbare Kurvenscheibe (31) mit Vorschubkurve (32) und einen mit der Kurvenscheibe (31) über die Vorschubkurve (32) in Wirkverbindung stehenden Hebelmechanismus (33) aufweist, wobei der Hebelmechanismus (33) zum Verfahren des Fahrgestells (21) mit dem Fahrgestell (21) gekoppelt ist.

2. Schaltfeld nach Anspruch 1, **dadurch gekennzeichnet, dass** der Hebelmechanismus (33) wenigstens eine mit der Vorschubkurve (32) in Wirkverbindung stehende, an einem Zwischenhebel (39, 40) angreifende Schubstange (42, 43) aufweist, wobei der Zwischenhebel (39, 40) einerends ortsfest schwenkbar gelagert ist und andernends mit dem einen Ende einer Antriebsstange (47, 48) gelenkig verbunden ist, deren anderes Ende zum Verfahren des Fahrgestells (21) mit dem Fahrgestell (21) gelenkig verbunden ist.

3. Schaltfeld nach Anspruch 1 oder 2, **dadurch gekennzeichnet, dass** die Vorschubkurve (32) eine Kulissennut ist, in die ein an der Schubstange (42, 43) vorhandenes Abtastglied (49) eingreift.

4. Schaltfeld nach Anspruch 3, **dadurch gekennzeichnet, dass** das Abtastglied (49) eine auf einem Tastbolzen (52) drehbar gelagerte Tastrolle (53) ist.

5. Schaltfeld nach einem der Ansprüche 2 bis 4, **dadurch gekennzeichnet, dass** die Schubstange (42, 43) zur geführten Verschiebung eine Koppelkurve (54, 55) aufweist, in die ein ortsfest angeordneter Bolzen (30) eingreift.

6. Schaltfeld nach einem der vorhergehenden Ansprüche, **dadurch gekennzeichnet, dass** die Kurvenscheibe (31) auf einem Bolzen (30) drehbar gelagert ist, wobei dieser Bolzen (30) in die Koppelkurve (54, 55) eingreift.

7. Schaltfeld nach einem der Ansprüche 2 bis 6, **dadurch gekennzeichnet, dass** das Schaltfeld als Hebelmechanismus (33) zwei spiegelsymmetrisch zueinander angeordnete Schubstangen (42, 43), Zwischenhebel (39, 40) und Antriebsstangen (47, 48) aufweist, wobei die beiden Schubstangen (42, 43) über ein Abtastglied (49) gegeneinander verschwenkbar verbunden sind.

8. Schaltfeld nach Anspruch 7, **dadurch gekennzeichnet, dass** das Abtastglied (49) eine auf einem Tastbolzen (52) gelagerte Tastrolle (53) ist.

9. Schaltfeld nach einem der vorhergehenden Ansprüche, **dadurch gekennzeichnet, dass** die Vorschubkurve (32) in den Endstellungen der Kurvenscheibe (31) weitgehend konzentrische Kurvenabschnitte aufweist, die keine oder nahezu keine Einfahr- bzw. Ausfahrbewegung des Fahrgestells (21) erzeugen.

10. Schaltfeld nach einem der vorhergehenden Ansprüche, **dadurch gekennzeichnet, dass** die Vorschubkurve (32) nach Einleitung der Einfahrbewegung des Fahrgestells (21) einen Kurvenabschnitt mit einer großen Kurvensteigung aufweist.

11. Schaltfeld nach einem der vorhergehenden Ansprüche, **dadurch gekennzeichnet, dass** die Vorschubkurve (32) kurz vor Erreichen der maximalen Einfahrbewegung des Fahrgestells (21) in das Schaltfeld einen Kurvenabschnitt mit einer flachen Kurvensteigung aufweist.

12. Schaltfeld nach einem der vorhergehenden Ansprüche, **dadurch gekennzeichnet, dass** in den Endstellungen des Fahrgestells (21) Meldungen mittels Meldeschieber (67) abgegeben werden.

13. Schaltfeld nach einem der vorhergehenden Ansprüche, **dadurch gekennzeichnet, dass** in den Endstellungen des Fahrgestells (21) Verriegelungen gesetzt werden.

14. Schaltfeld nach Anspruch 13, **dadurch gekennzeichnet, dass** die Kurvenscheibe (31) wenigstens eine Verriegelungskurve (57, 58) aufweist, die für den Eingriff von Verriegelungsbolzen (59, 60) vorgesehen ist.

15. Schaltfeld nach Anspruch 14, **dadurch gekennzeichnet, dass** ein um eine Achse schwenkbar gelagerter Verriegelungshebel (62) mit zwei Verriegelungsbolzen 59, 60) vorhanden ist, wobei in der einen Endstellung des Fahrgestells (21) der eine Verriegelungsbolzen (59) in eine Verriegelungskurve (57) und in der anderen Endstellung der andere Verriegelungsbolzen (60) in eine weitere Verriegelungskurve (58) eingreift.

16. Schaltfeld nach Anspruch 15, **dadurch gekennzeichnet, dass** an dem Verriegelungshebel (62) ein Meldeschieber (67) zur Abgabe der Meldung sowie zum Setzen von Verriegelungen vorhanden ist.

17. Schaltfeld nach einem der vorhergehenden Ansprüche, **dadurch gekennzeichnet, dass** die maximale Einfahrbewegung des Fahrgestells (21) in das Schaltfeld bei einer Drehung der Kurvenscheibe (31) von weniger als 360° erfolgt.

18. Schaltfeld nach einem der vorhergehenden Ansprüche, **dadurch gekennzeichnet, dass** bei Einleitung der Einfahrbewegung des Fahrgestells (21) in das Schaltfeld ein Schieberhebel (72) Schließblenden (77) öffnet und bei Beendigung der Ausfahrbewegung die Schließblenden (77) schließt.

19. Schaltfeld nach Anspruch 18, **dadurch gekennzeichnet, dass** die Kurvenscheibe eine Schließblendenkurve (57) aufweist, in die ein an dem Schieberhebel (72) angeordnetes Abtastglied (73) eingreift.

20. Schaltfeld nach einem der vorhergehenden Ansprüche, **dadurch gekennzeichnet, dass** die Antriebwelle (27) eine Ritzelwelle (37) ist, die in an der Kurvenscheibe (31) vorhandene Zahnlücken (38) eingreift.

21. Schaltfeld nach Anspruch 20, **dadurch gekennzeichnet, dass** die Kurvenscheibe (31) eine Kreisscheibe ist und dass die Zahnlücken (38) sowie die zwischen den Zahnlücken (38) vorhandenen Zahnstege im Bereich des Außenumfangs der Kurvenscheibe angeordnet sind.

22. Schaltfeld nach einem der vorhergehenden Ansprüche, **dadurch gekennzeichnet, dass** die Kurvenscheibe (31) aus Stahlblech ist.

## Claims

1. A switchgear panel, having a running gear (21) that is movable between two terminal positions in a framework (1) and is provided with at least one switch (16), having a drive unit that drives the running gear (21) and has a drive shaft (27), and having a retraction gear (29) that is disposed between the drive shaft (27) and the running gear (21), **characterized in that** the retraction gear (29) has a cam disk (31) that is drivable by the drive shaft (27) and has a feed cam (32), and the retraction gear also has a lever mechanism (33), operatively connected to the cam disk (31) via the feed cam (32), and the lever mechanism (33) is coupled with the running gear (21) for moving the running gear (21).

2. The switchgear panel as defined by claim 1, **characterized in that** the lever mechanism (33) has at least one thrust rod (42, 43), operatively connected to the feed cam (32) and engaging an intermediate lever (39, 40) is supported pivotably, fixed on one end, and on the other is connected in articulated fashion with one end of a drive rod (47, 48), whose other end is connected in articulated fashion to the running gear (21) for moving the running gear (21).

3. The switchgear panel as defined by claim 1 or 2, **characterized in that** the feed cam (32) is a connecting link slot, which is engaged by a scanning member (49) present on the thrust rod (42, 43).

4. The switchgear panel as defined by claim 3, **characterized in that** the scanning member (49) is a tracing roller (53) rotatably supported on a tracer pin (52).

5. The switchgear panel as defined by one of claims 2 to 4, **characterized in that** the thrust rod (42, 43), for guided displacement, has a coupling cam (54, 55) which is engaged by a bolt (30) that is disposed in stationary fashion.

6. The switchgear panel as defined by one of the foregoing claims, **characterized in that** the cam disk (31) is rotatably supported on a bolt (30), and this bolt engages the coupling cam (54, 55).

7. The switchgear panel as defined by one of claims 2 to 6, **characterized in that** the switchgear panel, as a lever mechanism (33), has two thrust rods (42, 43), disposed mirror-symmetrically to one another, intermediate levers (39, 40), and drive rods (47, 48), and the two thrust rods (42, 43) are connected pivotably counter to one another via a scanning member (49).

8. The switchgear panel as defined by claim 7, **characterized in that** the scanning member (49) is a tracing roller (53) supported on a tracer pin (52).

9. The switchgear panel as defined by one of the foregoing claims, **characterized in that** in the terminal positions of the cam disk (31), the feed cam (32) has largely concentric cam portions, which generate no or nearly no retraction or extension motion of the running gear (21).

10. The switchgear panel as defined by one of the foregoing claims, **characterized in that** after the introduction of the retraction motion of the running gear (21), the feed cam (32) has a cam portion with a high cam slope.

11. The switchgear panel as defined by one of the foregoing claims, **characterized in that** shortly before the maximum retraction motion of the running gear (21) into the switchgear panel is reached, the feed cam (32) has a cam portion with a low cam slope.

12. The switchgear panel as defined by one of the foregoing claims, **characterized in that** in the terminal positions of the running gear (21), messages are sent by means of signaling slides (67).

13. The switchgear panel as defined by one of the foregoing claims, **characterized in that** in the terminal positions of the running gear (21), locks are set.

14. The switchgear panel as defined by claim 13, **characterized in that** the cam disk (31) has at least one locking cam (57, 58), which is provided for the engagement of locking bolts (59, 60).

15. The switchgear panel as defined by claim 14, **characterized in that** there is a locking lever (62) with two locking bolts (59, 60) which is supported pivotably about an axis, and in one terminal position of the running gear (21), one locking bolt (59) engages one locking cam (57), and in the other terminal position, the other locking bolt (60) engages a further locking cam (58).

16. The switchgear panel as defined by claim 15, **characterized in that** a signaling slide (67) for sending the message and for setting locks is located on the locking lever (62).

17. The switchgear panel as defined by one of the foregoing claims, **characterized in that** the maximum retraction motion of the running gear (21) into the switchgear panel takes place upon a rotation of the cam disk (31) by less than 360°.

18. The switchgear panel as defined by one of the foregoing claims, **characterized in that** a slide lever (72) opens closing baffles (77) upon initiation of the retraction motion of the running gear (21) into the switchgear panel, and it closes the closing baffles (77) upon the termination of the extension motion.

19. The switchgear panel as defined by claim 18, **characterized in that** the cam disk has a closing baffle cam (57), which is engaged by a scanning member (73) disposed on the slide lever (72).

20. The switchgear panel as defined by one of the foregoing claims, **characterized in that** the drive shaft (27) is a pinion shaft (37), which engages tooth gaps (38) present on the cam disk (31).

21. The switchgear panel as defined by claim 20, **characterized in that** the cam disk (31) is a circular disk; and that the tooth gaps (38) as well as the tooth lands located between the tooth gaps (38) are disposed in the region of the outer circumference of the cam disk.

22. The switchgear panel as defined by one of the foregoing claims, **characterized in that** the cam disk (31) is of sheet steel.

## Revendications

1. Tableau de commande comportant un chariot (21) muni d'au moins un commutateur (16) et pouvant être déplacé dans un cadre (1) entre deux positions de butée, une unité d'entraînement présentant un arbre d'entraînement (27) entraînant le chariot (21), et une commande d'entrée (29) agencée entre l'arbre d'entraînement (27) et le chariot (21), **caractérisé en ce que** la commande d'entrée (29) présente une came (31), avec une came d'avance (32), pouvant être entraînée par l'arbre d'entraînement (27), et un mécanisme à levier (33) en liaison active avec la came (31) par le biais de la came d'avance (32), le mécanisme à levier (33) étant couplé au chariot (21) en vue de déplacer le chariot (21).

2. Tableau de commande selon la revendication 1, **caractérisé en ce que** le mécanisme à levier (33) présente au moins une bielle (42, 43) en liaison active avec la came d'avance (32) et venant saisir un levier intermédiaire (39, 40), le levier intermédiaire (39, 40) étant monté fixe de façon à pouvoir pivoter au niveau d'une extrémité et étant relié, au niveau de son autre extrémité, de façon articulée à une extrémité d'une tige d'entraînement (47, 48), l'autre extrémité de cette tige étant reliée de façon articulée au chariot (21) en vue de déplacer le chariot (21).

3. Tableau de commande selon la revendication 1 ou 2, **caractérisé en ce que** la came d'avance (32) est une rainure de came dans laquelle vient s'engager un organe de balayage (49) présent sur la bielle (42, 43).

4. Tableau de commande selon la revendication 3, **caractérisé en ce que** l'organe de balayage (49) est un galet palpeur (53) monté de façon à pouvoir tourner sur un palpeur (52).

5. Tableau de commande selon l'une des revendications 2 à 4, **caractérisé en ce que** la bielle (42, 43), pour un déplacement guidé, présente une trajectoire d'un point de la bielle (54, 55) dans laquelle vient s'engager un boulon (30) agencé fixe.

6. Tableau de commande selon l'une des revendications précédentes, **caractérisé en ce que** la came (31) est montée de façon à pouvoir pivoter sur un boulon (30), ce boulon (30) s'engageant dans la trajectoire d'un point de la bielle (54, 55).

7. Tableau de commande selon l'une des revendications 2 à 6, **caractérisé en ce que** le tableau en tant que mécanisme à levier (33) présente deux bielles (42, 43) agencées symétriquement l'une par rapport à l'autre, un levier intermédiaire (39, 40) et des tiges d'entraînement (47, 78), les deux bielles (42, 43) étant reliées de façon à pouvoir pivoter l'une par rapport à l'autre par le biais d'un organe de balayage (49).

8. Tableau de commande selon la revendication 7, **caractérisé en ce que** l'organe de balayage (49) est un galet palpeur (53) monté sur un palpeur (52).

9. Tableau de commande selon l'une des revendications précédentes, **caractérisé en ce que** la came d'avance (32) présente, dans les positions de butée de la came (31), des segments de courbe essentiellement concentriques qui n'engendrent pas ou quasiment pas de mouvement d'entrée ou de sortie du chariot (21).

10. Tableau de commande selon l'une des revendications précédentes, **caractérisé en ce que** la came d'avance (32), une fois le mouvement d'entrée du chariot (21) entamé, présente un segment de courbe avec une forte inclinaison.

11. Tableau de commande selon l'une des revendications précédentes, **caractérisé en ce que** la courbe d'avance (32), juste avant d'atteindre le mouvement d'entrée maximum du chariot (21) dans le tableau, présente un segment de courbe avec une inclinaison de courbe plate.

12. Tableau de commande selon l'une des revendications précédentes, **caractérisé en ce que** dans les positions de butée du chariot (21) des informations sont données par le biais du coulisseau de signalisation (67).

13. Tableau de commande selon l'une des revendications précédentes, **caractérisé en ce que** des verrouillages sont montés dans les positions de butée du chariot (21).

14. Tableau de commande selon la revendication 13, **caractérisé en ce que** la came (31) présente au moins une came de verrouillage (57, 58) qui est prévue pour l'engagement de boulons de verrouillage (59, 60).

15. Tableau de commande selon la revendication 14, **caractérisé en ce qu'**il est prévu un levier de verrouillage (62) monté de façon à pouvoir pivoter autour d'un axe avec deux boulons de verrouillage (59, 60), l'un des boulons de verrouillage (59) s'engageant dans une came de verrouillage (57), pour une position de butée du chariot (21) et l'autre boulon de verrouillage (60) s'engageant dans l'autre came de verrouillage (58) pour l'autre position de butée.

16. Tableau de commande selon la revendication 15, **caractérisé en ce qu'**il est prévu sur le levier de verrouillage (62) un coulisseau de signalisation (67) pour donner des informations ainsi que pour la mise en place des verrouillages.

17. Tableau de commande selon l'une des revendications précédentes, **caractérisé en ce que** le mouvement d'entrée maximum du chariot (21) dans le tableau est obtenu en tournant la came (31) de moins de 360°.

18. Tableau de commande selon l'une des revendications précédentes, **caractérisé en ce que**, lorsque l'on entame le mouvement d'entrée du chariot (21) dans le tableau, un levier à rallonge (72) ouvre des panneaux de fermeture (77) et à l'issue du mouvement de sortie ferme les panneaux de fermeture (77).

19. Tableau de commande selon la revendication 18, **caractérisé en ce que** la came présente une came de fermeture (57) dans laquelle s'engage un organe de balayage (73) agencé sur le levier à rallonge (72).

20. Tableau de commande selon l'une des revendications précédentes, **caractérisé en ce que** l'arbre d'entraînement (27) est un arbre à pignon (37) qui s'engage dans les entredents (38) présents sur la came (31).

21. Tableau de commande selon la revendication 20, **caractérisé en ce que** la came (31) est une came circulaire et **en ce que** les entredents (38) ainsi que les membrures présentes entre les entredents (38) sont agencés dans la zone du pourtour extérieur de la came.

22. Tableau de commande selon l'une des revendications précédentes, **caractérisé en ce que** la came (31) est en tôle.
